# EUROPÄISCHE PATENTSCHRIFT

(11) **EP 0 708 221 B1**
(45) Veröffentlichungstag und Bekanntmachung des Hinweises auf die Patenterteilung: **22.10.1997**
(21) Anmeldenummer: 95112995.6
(22) Anmeldetag: 18.08.1995
(51) Int. Cl.: E06B 3/22, E06B 3/96, B29C 65/78

(54) **Verfahren und Bausatz zur Herstellung von Gesamtrahmen aus Kunststoffprofilen**
Method and set of intermediate parts for manufacturing complete frames from plastic section members
Procédé et jeu de pièces préassemblées pour la fabrication des encadrements entiers à partir de profilés en matière plastique

(30) Priorität: 17.10.1994 DE 4437095
(43) Veröffentlichungstag der Anmeldung: 24.04.1996
(73) Patentinhaber: BRÜGMANN FRISOPLAST GmbH, D-26871 Papenburg (DE)
(72) Erfinder:
(74) Vertreter: Eikenberg, Kurt-Rudolf, Dr. Dipl.-Chem.

(56) Entgegenhaltungen:
- EP-A- 0 563 030
- DE-A- 2 623 750

## Beschreibung

Bei der Herstellung von Fensterrahmen oder Türrahmen aus Kunststoff ist es heute üblich, die Profile für die Blendrahmen und die Flügelrahmen separat zuzuschneiden und zu verschweißen. Dabei muß die Differenz in den Außenmaßen der beiden Rahmen in Richtung der Rahmenebene berücksichtigt und beim Zuschnitt sowie auch beim Schweißvorgang genau eingehalten werden.

Moderne Rahmensysteme sehen eine Anzahl unterschiedlicher Blendrahmen- und Flügelrahmenprofile vor, die sich dem jeweiligen Bedarf entsprechend miteinander kombinieren lassen. Hierbei entstehen unterschiedliche Differenzmaße, die für alle möglichen Paarungen von Blendrahmen- und Flügelrahmenprofile festgelegt sind. Die jeweils richtigen Differenzmaße müssen dann z.B. aus Tabellen entnommen und für jede Rahmenpaarung beim Zuschnitt sowie beim Schweißvorgang neu eingestellt werden. Das ist aufwendig und führt zur Gefahr von Maßabweichungen. Hinzu kommt, daß durch die separate Bearbeitung der Rahmen ohnehin die doppelte Anzahl von Arbeitsvorgängen anfällt. Dies gilt für den Zuschnitt und das Verschweißen sowie auch für das nach dem Verschweißen meistens noch erforderliche Verputzen, d.h. Glätten der Schweißnaht.

In unserer eigenen DE-A 26 23 750 ist nun bereits ein Verfahren zur Herstellung von Gesamtrahmen aus Kunststoff-Profilen für Blendrahmen und Flügelrahmen vorgeschlagen worden, bei dem die Blendrahmenprofile und die Flügelrahmenprofile mit Hilfe von mindestens einem zwischengelegten Distanzstück, welches die Differenz der Rahmenaußenmaße in Richtung der Rahmenebene ausgleicht, temporär miteinander verbunden und in diesem Verbund gemeinsam zugeschnitten, verschweißt und ggfs. verputzt werden. Das vorgeschlagene Verfahren versagt aber gerade bei der Herstellung der üblichen Fenster- oder Türgesamtrahmen. Übliche Fenster oder Türen sind nämlich so konstruiert, daß der Flügelrahmen den Blendrahmen in der für das vorgeschlagene Verfahren notwendigen Arbeitsstellung berührt oder ihm zumindest nahekommt. Bei der Durchführung des in der DE-A 26 23 750 beschriebenen Verfahrens werden daher der Blendrahmen und der Flügelrahmen im Eckbereich miteinander verschweißt.

Hier setzt die Erfindung ein. Mit der Erfindung soll ein Verfahren zur Herstellung von Gesamtrahmen aus Kunststoff-Profilen für Blendrahmen und Flügelrahmen zur Verfügung gestellt werden, das die Nachteile des in der DE-A 26 23 750 beschriebenen Verfahrens nicht aufweist und es somit gestattet, die Blendrahmen- und Flügelrahmenprofile eines Gesamtrahmens unter Berücksichtigung der vorgegebenen Differenzmaße mit hoher Paßgenauigkeit in einem Arbeitsgang zuzuschneiden und zu verschweißen.

Ausgehend von einem Verfahren der in der DE-A 26 23 750 beschriebenen Art gemäß dem Oberbegriff des Anspruchs 1 gelingt dies, indem erfindungsgemäß durch ein Distanzstück zusätzlich zur Differenz der Rahmenanßenmaße senkrecht zur Rahmenebene ein Abstand zwischen den Rahmenprofilen in Richtung senkrecht zur Rahmenebene vorgegeben wird. Auf diese Weise wird verhindert, daß Flügelrahmen und Blendrahmen in ihren Eckbereichen miteinander verschweißt werden, und zwar unabhängig davon, ob der Flügelrahmen im geschlossenen Zustand des Fensters oder der Tür den Blendrahmen berührt oder nicht.

Der zusätzliche zur Differenz der Rahmenaußenmaße senkrecht zur Rahmenebene vorgegebene Abstand zwischen den Rahmenprofilen in Richtung senkrecht zur Rahmenebene hängt von der Gesamtfunktion der Profile ab und wird zweckmäßig auf einen Bereich von 3 - 10 mm eingestellt.

Bei dem Distanzstück zum Ausgleich des Differenzmaßes in Richtung der Rahmenebene und dem Distanzstück zur Vorgabe eines zusätzlichen Abstandes in Richtung senkrecht zur Rahmenebene kann es sich um ein einziges Teil handeln, welches beide Maße berücksichtigt, es können aber auch zwei gesonderte Teile für jeweils eines der beiden Maße vorgesehen sein. Welche Ausbildung des Distanzstückes zweckmäßig ist, richtet sich nach den Gegebenheiten des Einzelfalles. Einteilige Distanzstücke haben den Vorteil einer einfacheren und übersichtlicheren Lagerhaltung, können aber, wenn sie ungünstig positioniert sind, unter Umständen eine sichere Fixierung der Profile relativ zueinander beeinträchtigen und beispielsweise zu Kippbewegungen des Blendrahmens führen.

Die Distanzstücke können die Form einzelner Klötzchen haben, welche im Abstand voneinander zwischen die Profile gelegt werden, sie können aber auch als durchlaufende Distanzprofile ausgebildet sein. Im letzteren Fall bestehen sie zweckmäßig aus einem thermoplastischen Material, das mit dem Rahmenmaterial keine Schweißverbindungen eingeht und sich nach dem Verschweißen der Rahmen auch in den Ecken leicht von den Rahmen trennen läßt.

Besonders stark kommen die Vorteile der Erfindung zum Tragen, wenn es sich bei dem Flügelrahmenprofil um ein solches mit integrierter Glasleiste gemäß unserer deutschen Patentanmeldung P 44 01 969.6 handelt. Dort ist ein Flügelrahmenprofil beschrieben, das mit der Glasleiste verrastet wird, worauf die verrasteten Teile dann gemeinsam zugeschnitten, verschweißt und ggfs. verputzt werden. Dadurch entsteht in einem Arbeitsgang mit der Flügelherstellung ein eckverschweißter, sehr paßgenauer "Glasleistenrahmen". Wenn bei dem erfindungsgemäßen Verfahren ein solches Flügelrahmenprofil zum Einsatz kommt, kann in einem Arbeitsgang mit der Herstellung des Gesamtrahmens zugleich auch der Glasleistenrahmen erzeugt werden. Die erforderlichen Dichtungen können in die Profile eingezogen oder vorzugsweise co-extrudiert werden.

Sämtliche für die Herstellung eines fertigen Rahmens erforderlichen Bauteile, nämlich das Blendrahmenprofil, das Flügelrahmenprofil und das Distanzstück sowie vorzugsweise noch Glasleiste und Dichtungen lassen sich zu einem erfindungsgemäßen Bausatz verpacken, In welchem sie durch ein Hilfsmittel zur Erzeugung eines temporären Verbundes in einer Anordnung fixiert sind, in der die Differenz der Rahmenprofilaußenmaße in Richtung der Rahmenebene ausgeglichen und zusätzlich zur Differenz der Rahmenaußenmaße senkrecht zur Rahmenebene ein Abstand zwischen den Rahmenprofilen in Richtung senkrecht zur Rahmenebene vorgegeben ist. Die Verpackung zum Bausatz kann beispielsweise beim Profilhersteller geschehen, so daß der Verarbeiter die Fixierung der Profile nicht mehr selbst vornehmen muß, sondern nur noch diesen Bausatz als solchen zuzuschneiden und zu veschweißen braucht. Dadurch ergibt sich eine Verringerung der Lagerhaltung und eine zusätzliche Arbeitsersparnis bei extrem hoher Paßgenauigkeit aller Rahmenteile.

Die Erfindung wird nachfolgend in einem Ausführungsbeispiel anhand der Zeichnungen näher erläutert. Dabei stellen dar
- Fig. 1: die Querschnittsansicht eines Gesamtrahmens vor dem Zuschneiden und Verschweißen der Rahmenprofile, und
- Fig. 2: die Querschnittsansicht des gleichen Rahmens im gebrauchsfertigen Zustand.

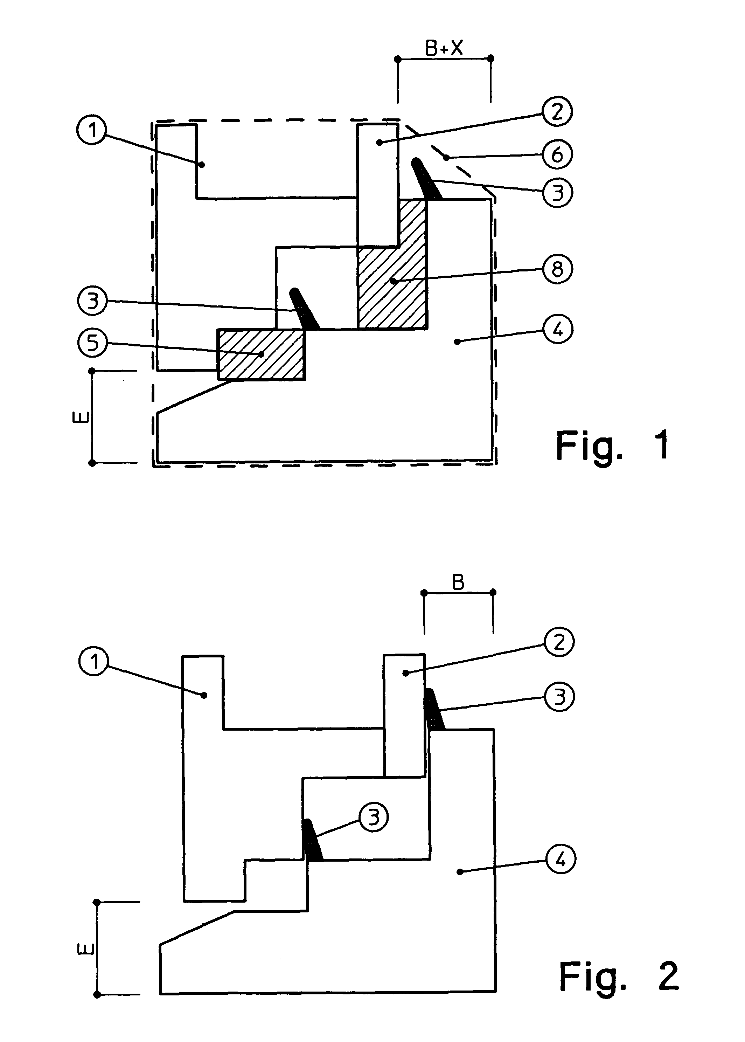

Der in Fig. 2 dargestellte Rahmen umfaßt ein Flügelrahmenprofil 1 mit Glasleiste 2, einen Blendrahmen 4 und Dichtungsprofile 3 zwischen Blendrahmen und Flügelrahmen. In Richtung der Rahmenebene ist das Außenmaß des Flügelrahmens um den Betrag E kleiner als das Außenmaß des Blendrahmens, und in Richtung senkrecht zur Rahmenebene besteht eine Maßdifferenz B zwischen der Innenseite des Blendrahmens und des Flügelrahmens (bzw. im dargestellten Beispiel der Glasleiste).

Zur Herstellung des Rahmens gemäß Fig. 2 werden, wie in Fig. 1 gezeigt, die Profile des Blendrahmens 4 und des Flügelrahmens 1 (im dargestellten Beispiel zusammen mit der Glasleiste 2 und den Dichtungen 3) mit Hilfe von zwischengelegten Distanzstücken 5 und 8 in dem für das gemeinsame Zuschneiden und Verschweißen erforderlichen Abstand zueinander fixiert und in dieser Lage temporär miteinander verbunden. Der temporäre Verbund, der zweckmäßig mittels einer Schrumpffolie 6 oder mittels entsprechender Hilfsmittel wie Klebebändern oder Spannbändern oder durch Umwickeln o.dgl. hergestellt wird, sorgt dafür, daß sich die Relativlage aller Teile zueinander nicht mehr ändern kann, so daß die Teile dann gemeinsam in je einem Arbeitsgang zugeschnitten, verschweißt und ggfs. verputzt werden können. Danach ist der Verbund nicht mehr erforderlich und kann wieder gelöst werden.

Beide Distanzstücke 5 und 8 sind so bemessen, daß sie in Richtung der Rahmenebene das Differenzmaß E zwischen Blendrahmen 4 und Flügelrahmen 1 sowie in Richtung senkrecht zur Rahmenebene auf der Rahmeninnenseite einen zusätzlichen Abstand X zwischen Blendrahmen und Flügelrahmen erzeugen. Das Differenzmaß E ist für den paßgenauen Sitz des Flügelrahmens im Blendrahmen erforderlich, und der zusätzliche Abstand X, der die Größenordnung von 3 - 10 mm hat, verhindert ein Verschweißen der Profile in den Eckenbereichen.

Im Prinzip würde eines der Distanzstücke 5 und 8 genügen, aber dann besteht im dargestellten Beispiel die Gefahr, daß beim beim Verbinden der Profile mittels der Schrumpffolie 6 das Flügelrahmenprofil zum Blendrahmenprofil hin kippt und nicht mehr richtig positioniert ist. Würde beispielsweise die mittlere der Dichtungen 3 fehlen, könnten dagegen die Distanzstücke 5 und 8 ohne weiteres als einteiliges Distanzstück ausgebildet sein.

Dadurch, daß die Distanzstücke 5 und 8 sowohl in Richtung der Rahmenebene als auch senkrecht dazu fest an beiden Rahmenprofilen anliegen, ist ihr korrekter Sitz zwangsläufig gewährleistet. Es ist jedoch auch möglich, eines der Distanzstücke nur zur Erzeugung des zusätzlichen Abstandes X zu bemessen, sofern dafür gesorgt ist, daß der korrekte Sitz der Distanzstücke zwischen den Profilen gewährleistet bleibt.

Die Erfindung ist nicht auf die Anwendung bei dem zeichnerisch dargestellten Rahmenbeispiel beschränkt, sondern universell bei allen Rahmenprofilen anwendbar, denn jedes Rahmenprofil besitzt Flächen, an denen Distanzstücke analog der Distanzstücke 5 und 8 bzw. auch einteilige Distanzstücke zur Anlage kommen können. Auch ist es nicht erforderlich, die Glasleiste und die Dichtungen gemeinsam mit den Rahmenprofilen verarbeitet werden. Das ist zwar in vielen Fällen zweckmäßig, aber es gibt auch Fälle, in denen es zweckmäßiger ist, die Glasleiste und die Dichtungen in herkömmlicher Weise separat zuzuschneiden und nicht zu verschweißen.

## Patentansprüche

1. Verfahren zur Herstellung von Gesamtrahmen aus Kunststoff-Profilen für Blendrahmen und Flügelrahmen, bei dem die Blendrahmenprofile (4) und die Flügelrahmenprofile (1) mit Hilfe von mindestens einem zwischengelegten Distanzstück, welches die Differenz (E) der Rahmenaußenmaße in Richtung der Rahmenebene ausgleicht, temporär miteinander verbunden und in diesem Verbund gemeinsam zugeschnitten, verschweißt und ggfs. verputzt werden, dadurch gekennzeichnet, daß durch ein Distanzstück (5,8) zusätzlich zu der Differenz (B) der Rahmenaußenmaße senkrecht zur Rahmenebene ein Abstand (X) zwischen den Rahmenprofilen (4,1) in Richtung senkrecht zur Rahmenebene vorgegeben wird.

2. Verfahren nach Anspruch 1, dadurch gekennzeichnet, daß der zusätzliche Abstand (X) auf einen Bereich von 3 - 10 mm eingestellt wird.

3. Verfahren nach einem der vorhergehenden Ansprüche, dadurch gekennzeichnet, daß das Differenzmaß (E) und der zusätzliche Abstand (X) mit Hilfe des gleichen Distanzstücks (5,8) erzeugt werden.

4. Verfahren nach einem der vorhergehenden Ansprüche, dadurch gekennzeichnet, daß die Flügelrahmenprofile (1) gemeinsam mit ihrer zugeordneten Glasleiste (2) in den Verbund mit den Blendrahmenprofilen (4) eingebracht werden.

5. Verfahren nach einem der vorhergehenden Ansprüche, dadurch gekennzeichnet, daß der temporäre Verbund der Profile (1,4) mittels einer Schrumpffolie (6) oder eines entsprechenden Hilfsmittels hergestellt wird.

6. Bausatz zur Herstellung eines Gesamtrahmens, umfassend ein Flügelrahmenprofil (1), ein Blendrahmenprofil (4) und ein Distanzstück (5,8), wobei Flügelrahmenprofil (1), Blendrahmenprofil (4) und Distanzstück (5,8) durch ein Hilfsmittel zur Erzeugung eines temporären Verbundes in einer Anordnung fixiert sind, in der die Differenz (E) der Rahmenprofilaußenmaße in Richtung der Rahmenebene ausgeglichen ist, dadurch gekennzeichnet, daß zusätzlich zu der Differenz (B) der Rahmenaußenmaße senkrecht zur Rahmenebene ein Abstand (X) zwischen den Rahmenprofilen (4,1) in Richtung senkrecht zur Rahmenebene vorgegeben ist.

7. Bausatz nach Anspruch 6, dadurch gekennzeichnet, daß das Distanzstück (5,8) aus einem thermoplastischen Material besteht, welches mit dem Material der Rahmenprofile (1,4) keine Schweißverbindung eingeht.

8. Bausatz nach Anspruch 7, dadurch gekennzeichnet, daß das Distanzstück (5,8) mindestens zwei parallele Flächen enthält, die zwischen zwei zueinander parallelen Flächen des Blendrahmens (4) bzw. des Flügelrahmens (1) am Blendrahmen bzw. Flügelrahmen zur Anlage kommen und die Rahmen (1,4) in einem vorbestimmten Abstand zueinander halten.

## Claims

1. Method of producing entire frames made up of plastic profiles for outer frames and sash/leaf frames, in the case of which method the outer-frame profiles (4) and the sash/leaf frame profiles (1) are connected temporarily to one another with the aid of at least one interposed spacer piece, which compensates for the difference (E) in the frame outer dimensions in the direction of the frame plane, and, in this assembled arrangement, are jointly cut to size, welded and, if appropriate, finished, characterized in that, in addition to the difference (B) in the frame outer dimensions perpendicular to the frame plane, a spacer piece (5, 8) gives a distance (X) between the frame profiles (4, 1) in the direction perpendicular to the frame plane.

2. Method according to Claim 1, characterized in that the additional distance (X) is set to a range of from 3-10 mm.

3. Method according to one of the preceding claims, characterized in that the difference dimension (E) and the additional distance (X) are produced with the aid of the same spacer piece (5, 8).

4. Method according to one of the preceding claims, characterized in that the sash/leaf-frame profiles (1) are brought into the assembled arrangement with the outer-frame profiles (4) together with their assigned glazing bar (2).

5. Method according to one of the preceding claims, characterized in that the temporary assembled arrangement of the profiles (1, 4) is produced by means of a shrink film (6) or of a corresponding auxiliary means.

6. Set of structural elements for producing an entire frame, comprising a sash/leaf-frame profile (1), an outer-frame profile (4) and a spacer piece (5, 8), sash/leaf-frame profile (1), outer-frame profile (4) and spacer piece (5, 8) being fixed, by an auxiliary means for producing a temporary assembled arrangement, in an arrangement in which there is compensation for the difference (E) in the frame-profile outer dimensions in the direction of the frame plane, characterized in that, in addition to the difference (B) in the frame outer dimensions perpendicular to the frame plane, a distance (X) is given between the frame profiles (4, 1) in the direction perpendicular to the frame plane.

7. Set of structural elements according to Claim 6, characterized in that the spacer piece (5, 8) consists of a thermoplastic material which does not undergo welding with the material of the frame profiles (1, 4).

8. Set of structural elements according to Claim 7, characterized in that the spacer piece (5, 8) contains at least two parallel surfaces which come to bear on the outer frame (4) and sash/leaf frame (1), between two mutually parallel surfaces of the outer frame and of the sash/leaf frame, and retain the frames (1, 4) at a predetermined distance from one another.

## Revendications

1. Procédé pour la fabrication de cadres complets à partir de profilés en matière plastique pour le bâti dormant et le cadre de vantail, pour lequel les profilés de bâti dormant (4) et les profilés de cadre de vantail (1) sont reliés temporairement au moyen d'au moins une pièce d'écartement intercalée qui compense la différence (E) des dimensions extérieures du cadre dans le sens du plan du cadre et sont découpés, soudés et, le cas échéant, enduits en commun dans cet ensemble composé, caractérisé en ce que, grâce à une pièce d'écartement (5, 8), en plus de la différence (B) des dimensions extérieures du cadre perpendiculairement au plan du cadre, un écartement (X) entre les profilés du cadre (4, 1) est prédéfini dans le sens perpendiculaire au plan du cadre.

2. Procédé selon la revendication 1, caractérisé en ce que l'écartement supplémentaire (X) est ajusté de l'ordre de 3 à 10 mm.

3. Procédé selon l'une des revendications précédentes, caractérisé en ce que la dimension différentielle (E) et l'écartement supplémentaire (X) sont réalisés à l'aide de la même pièce d'écartement (5, 8).

4. Procédé selon l'une des revendications précédentes, caractérisé en ce que les profilés de cadre de vantail (1) sont insérés en commun avec leur baguette de verre correspondante (2) dans l'ensemble composé avec les profilés de bâti dormant.

5. Procédé selon l'une des revendications précédentes, caractérisé en ce que l'ensemble composé temporaire des profilés (1, 4) est réalisé au moyen d'une feuille rétractable (6) ou d'un moyen auxiliaire correspondant.

6. Kit de construction pour fabriquer un cadre complet, comprenant un profilé de cadre de vantail (1), un profilé de bâti dormant (4) et une pièce d'écartement (5, 8), le profilé de cadre de vantail (1), le profilé de bâti dormant (4) et la pièce d'écartement (5, 8) étant fixés par un moyen auxiliaire pour fabriquer un ensemble composé temporaire dans un arrangement dans lequel la différence (E) des dimensions extérieures du profilé de cadre est compensée dans le sens du plan du cadre, caractérisé en ce qu'en plus de la différence (B) des dimensions extérieures du cadre perpendiculairement au plan du cadre un écartement (X) entre les profilés du cadre (4, 1) est prédéfini dans le sens perpendiculaire au plan du cadre.

7. Kit de construction selon la revendication 6, caractérisé en ce que la pièce d'écartement (5, 8) est en une matière thermoplastique qui ne peut pas être soudée à la matière des profilés du cadre (1, 4).

8. Kit de construction selon la revendication 7, caractérisé en ce que la pièce d'écartement (5, 8) contient au moins deux surfaces l'une à l'autre qui viennent en appui entre deux surfaces parallèles l'une à l'autre du bâti dormant (4) ou du cadre de vantail (1) sur le bâti dormant ou le cadre de vantail et qui maintiennent les cadres (1, 4) à un écart prédéfini l'un par rapport à l'autre.
